# EUROPÄISCHE PATENTSCHRIFT

(11) **EP 0 990 310 B1**
(45) Veröffentlichungstag und Bekanntmachung des Hinweises auf die Patenterteilung: **14.11.2001**
(21) Anmeldenummer: 98931924.9
(22) Anmeldetag: 15.04.1998
(51) Int. Cl.: H04B 1/38, B60R 11/02

(54) **KRAFTFAHRZEUG-EINBAUVORRICHTUNG FÜR MOBILTELEFON**
BUILT-IN MOBILE TELEPHONE DEVICE FOR MOTOR VEHICLES
DISPOSITIF POUR MONTER UN TELEPHONE MOBILE DANS UN VEHICULE AUTOMOBILE

(30) Priorität: 20.06.1997 DE 19726320
(43) Veröffentlichungstag der Anmeldung: 05.04.2000
(73) Patentinhaber: SIEMENS AKTIENGESELLSCHAFT, 80333 München (DE)
(72) Erfinder: GÜNTZER, Peter, D-82194 Gröbenzell (DE); STENGER, Herbert, D-82178 Puchheim (DE)
(86) Internationale Anmeldenummer: DE9801060
(87) Internationale Veröffentlichungsnummer: WO9859425

(56) Entgegenhaltungen:
- EP-A- 0 723 378
- WO-A-94/24775

## Beschreibung

Die Erfindung betrifft eine Kraftfahrzeug-Einbauvorrichtung für Mobiltelefone.

Eine derartige Kraftfahrzeug-Einbauvorrichtung für Mobiltelefone weist eine Zentralsteuereinheit zur Steuerung der Funktionen der Einbauvorrichtung, eine Verbindung mit dem Mobiltelefon zur Versorgung mit Betriebsspannung, zum Austausch von Sprach- und/oder Datensignalen oder dergleichen und eine Schnittstelle zur Signalübertragung von/zum Kraftfahrzeug auf. Zwischen Kraftfahrzeug und Einbauvorrichtung für das Mobiltelefon werden die Stromversorgung, Hochfrequenzsignale zur Verbindung des Mobiltelefons mit einer Kraftfahrzeug-antenne, ein Zündsignal und Sprachsignale zur Verbindung mit einer Freisprechanlage (Lautsprecher und Mikrofon) ausgetauscht. Weiterhin kann vorgesehen sein, Datensignale von/zu einem Fahrerinformationssystem, dem Autoradio oder einem Kraftfahrzeugdatenbus oder einem externen Faxgerät oder tragbaren Computer auszutauschen. Eine weitere Möglichkeit ist, mit der Armaturenbrettbeleuchtung des Kraftfahrzeugs auch das Anzeigefeld des Mobiltelefons zu beleuchten.

Bei unterschiedlichen Kraftfahrzeugherstellern und Kraftfahrzeugtypen sind nur einige der vorgenannten elektrischen Signale standardisiert, beispielsweise die 12-Volt-Bordstromversorgung oder das Zündsignal. Dies gilt jedoch auch wiederum nur für PKW. Die anderen Signalarten unterscheiden sich je nach Fahrzeughersteller bzw. Fahrzeugtyp. Damit tritt das Problem auf, daß die Zentralsteuereinheit der Kraftfahrzeug-Einbauvorrichtung für jeden Kraftfahrzeugtyp spezifisch ausgebildet sein muß. Dies erfordert einen hohen Entwicklungs-und Herstellungsaufwand und macht die Kraftfahrzeug-Einbauvorrichtung daher teuer.

Ein weiteres Problem liegt in der mechanischen Ankopplung der Kraftfahrzeug-Einbauvorrichtung mit den elektrischen Schaltkreisen des Kraftfahrzeugs.

Die im Verband Deutscher Automobilhersteller (VDA) zusammengeschlossenen Automobilhersteller haben sich auf eine Richtlinie geeinigt, die die mechanische und elektrische Schnittstelle zwischen einer Kraftfahrzeug-Einbauvorrichtung und dem Kraftfahrzeug definieren soll. Jedoch sind insbesondere Zusatzfunktionen wie die Kommunikation zwischen einem fahrzeugeigenen Kommunikationssystem und dem Mobiltelefon in der VDA-Richtlinie nur unzureichend definiert.

Auch eine in der VDA-Richtlinie definierte Steckverbindung wird nicht universell in Kraftfahrzeugen eingesetzt. Insbesondere sind nicht dem VDA angehörende Automobilhersteller an die Richtlinie nicht gebunden. Es tritt daher das Problem auf, daß eine Kraftfahrzeug-Einbauvorrichtung zur Verwendung mit verschiedenen Kraftfahrzeugtypen mit unterschiedlichen Steckverbindungen ausgerüstet werden muß. Dies führt ebenso zu einem höheren Preis der Einbauvorrichtung.

Die Druckschrift EP 0 723 378 beschreibt eine Einbauvorrichtung für ein Mobiltelefon in einem Kraftfahrzeug. Dabei wird eine Möglichkeit angegeben, wie eine Vielzahl unterschiedlicher Mobiltelefone (beispielsweise Geräte verschiedener Hersteller) an eine Schnittstelle angeschlossen werden können. Auf der Fahrzeugseite wird dagegen ein standardisierter, universeller (Bus-)Steckverbinder vorgesehen.

Der Erfindung liegt daher die Aufgabe zugrunde, eine Kraftfahrzeug-Einbauvorrichtung für ein Mobiltelefon vorzuschlagen, welche mit möglichst geringem Aufwand und Kosten zur Verwendung mit verschiedenen Kraftfahrzeugtypen umrüstbar ist. Gelöst wird die Aufgabe durch eine in Anspruch 1 definierte Kraftfahrzeug-Einbauvorrichtung für ein Mobiltelefon, die eine Kraftfahrzeug-Einbauvorrichtung für ein Mobiltelefon, die eine kraftfahrzeugspezifische Anpassungseinheit zur Anpassung von Funktionen der Schnittstelle und/oder Zentralsteuereinheit an den jeweiligen Kraftfahrzeugtyp aufweist. Die Zentralsteuereinheit und die Schnittstelle sind unabhängig vom Kraftfahrzeugtyp und können daher universell eingesetzt und in hohen Stückzahlen produziert werden. Die Anpassung an den jeweiligen Kraftfahrzeugtyp erfolgt über die kraftfahrzeugspezifische Anpassungssteuereinheit. Ein weiterer Vorteil der erfindungsgemäßen Kraftfahrzeug-Einbauvorrichtung liegt darin, daß eine nachträgliche Anpassung an neue Kraftfahrzeugtypen oder die Realisierung neuer Funktionen vereinfacht ist.

Die Anpassungssteuereinheit kann eine Einrichtung zur Umsetzung von unterschiedlichen, an der Schnittstelle anliegenden Signalpegeln des Kraftfahrzeugs einerseits und der Einbauvorrichtung andererseits sowie eine Einrichtung zur Umsetzung von Signalen von einem fahrzeugspezifischen Kommunikationsprotokoll in ein telefonspezifisches Kommunikationsprotokoll und umgekehrt aufweisen. Die Anpassungssteuereinheit kann weiterhin eine Verbindung des Mobiltelefons mit dem Kraftfahrzeug-Radio, der Kraftfahrzeugbeleuchtungsschaltung und/oder einem Kraftfahrzeug-Datenbus ermöglichen. Dadurch werden Zusatzfunktionen, beispielsweise die Nutzung der Audio-Endstufe oder der Lautsprecher des Kraftfahrzeug-Radios oder der Beleuchtungsregelung für das Mobiltelefon ermöglicht.

Die Anpassungssteuereinheit kann im gleichen Gehäuse zusammen mit der Zentralsteuereinheit und der Schnittstelle untergebracht sein. Dies hat den Vorteil, daß sich bei einer Anpassung der Kraftfahrzeug-Einbauvorrichtung an einen neuen Kraftfahrzeugtyp oder einer Aufnahme neuer Funktionen keine Änderung der Gehäusekonstruktion erforderlich ist. Die Anpassungssteuereinheit kann als auf eine Grundplatine aufsteckbare Steckplatine ausgebildet sein, was einen Austausch der Anpassungssteuereinheit erleichtert.

Alternativ kann die Anpassungssteuereinheit in einem separaten Gehäuse ausgebildet sein, welches über eine standardisierte Steckverbindung oder eine innenliegende Steckverbindung mit der Einbauvorrichtung und mittels einer kraftfahrzeugspezifischen Steckverbindung mit dem Kraftfahrzeug verbindbar ist. Dies ermöglicht eine gleichzeitige elektrische und mechanische Anpassung an den jeweiligen Kraftfahrzeugtyp.

Die Verbindung zwischen Einbauvorrichtung und Kraftfahrzeug kann mittels einer standardisierten Steckverbindung, beispielsweise nach der VDA-Richtlinie, oder mittels einer kraftfahrzeugspezifischen Steckverbindung erfolgen. Es können auch beide Steckverbindungstypen gleichzeitig vorgesehen sein, wobei vorzugsweise die Zentralsteuereinheit über eine standardisierte Steckverbindung und die Anpassungssteuereinheit über eine kraftfahrzeugspezifische Steckverbindung mit dem Kraftfahrzeug verbunden ist. Dann können Standardfunktionen wie beispielsweise Stromversorgung, Freisprecheinrichtung über die standardisierte Steckverbindung und Zusatzfunktionen wie Beleuchtung, Verbindung mit Audioradio oder Kraftfahrzeug-Datenbus über die kraftfahrzeugspezifische Steckverbindung erfolgen. Dies hat den Vorteil, daß der kraftfahrzeugspezifische Steckverbinder eine geringere Polzahl aufweisen kann und damit kostengünstiger herstellbar ist.

Alternativ kann die Schnittstelle der erfindungsgemäßen Kraftfahrzeug-Einbauvorrichtung so ausgebildet sein, daß die Verbindung mit dem Kraftfahrzeug wahlweise mittels einer standardisierten Steckverbindung oder einer kraftfahrzeugspezifischen Steckverbindung erfolgen kann. Eine Anpassung an verschiedene mechanische Steckertypen kann dann leicht ohne große Änderungen an der Einbauvorrichtung selbst erfolgen.

Die Erfindung schlägt weiterhin eine Kraftfahrzeug-Einbauvorrichtung für Mobiltelefone vor, bei der die Schnittstelle ausgebildet ist zur Verbindung der Einbauvorrichtung mit dem Kraftfahrzeug wahlweise mittels einer standardisierten Steckverbindung oder einer kraftfahrzeugspezifischen Steckverbindung.

Die kraftfahrzeugspezifische Steckverbindung kann dabei über einen Kabelbaum durch das Gehäuse der Kraftfahrzeug-Einbauvorrichtung geführt werden. Eine derartige Konstruktion erlaubt eine höchstmögliche Flexibilität bei der Anpassung der Einbauvorrichtung an verschiedene Steckersysteme unterschiedlicher Kraftfahrzeuge, da die Kfz-spezifische Steckverbindung am Ende des Kabelbaums und nicht mehr am/im Gehäuse der Einbauvorrichtung angeordnet ist.

Im folgenden werden Ausführungsbeispiele der erfindungsgemäßen Kraftfahrzeug-Einbauvorrichtung anhand der beiliegenden Zeichnungen im Detail erläutert, in denen
Fig. 1 schematisch ein erstes Ausführungsbeispiel einer erfindungsgemäßen Kraftfahrzeug-Einbauvorrichtung zeigt;
Fig. 2 ein zweites Ausführungsbeispiel einer erfindungsgemäßen Kraftfahrzeug-Einbauvorrichtung zeigt;
Fig. 3 ein drittes Ausführungsbeispiel einer erfindungsgemäßen Kraftfahrzeug-Einbauvorrichtung zeigt;
Fig. 4 ein viertes Ausführungsbeispiel einer erfindungsgemäßen Kraftfahrzeug-Einbauvorrichtung zeigt;
Fig. 5 ein fünftes Ausführungsbeispiel einer erfindungsgemäßen Kraftfahrzeug-Einbauvorrichtung zeigt;
Fig. 6 ein sechstes Ausführungsbeispiel einer erfindungsgemäßen Kraftfahrzeug-Einbauvorrichtung zeigt;
Fig. 7 ein siebtes Ausführungsbeispiel einer erfindungsgemäßen Kraftfahrzeug-Einbauvorrichtung zeigt; und
Fig. 8 eine Kraftfahrzeug-Einbauvorrichtung gemäß dem Stand der Technik zeigt.

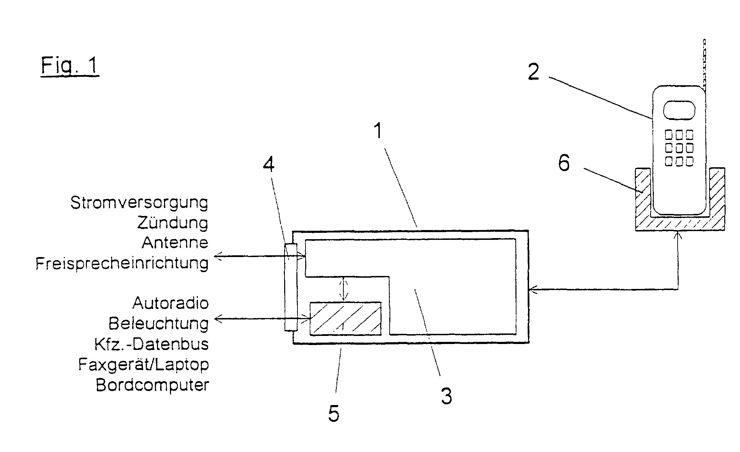

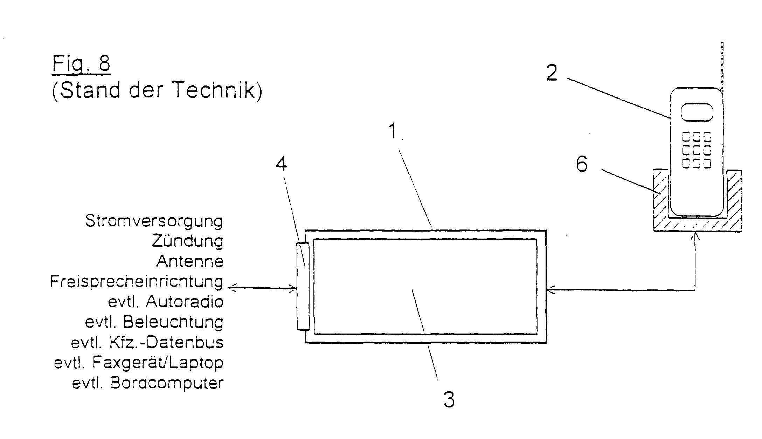

Fig. 1 zeigt ein erstes Ausführungsbeispiel einer erfindungsgemäßen Kraftfahrzeug-Einbauvorrichtung. Die insgesamt mit 1 bezeichnete Kraftfahrzeug-Einbauvorrichtung ist wie eine in Fig. 8 gezeigte bekannte Kraftfahrzeug-Einbauvorrichtung mit einer Halterung 6 für ein Mobiltelefon 2 verbunden. Die Erfindung ist dabei nicht auf Mobiltelefone beschränkt sondern auch auf Mobiltelefon-Module, also Funktionsgruppen ohne eigene Tastatur oder Anzeige als sogenannte "embedded systems" anwendbar. Die Einbauvorrichtung 1 weist eine Zentralsteuereinheit 3 zur Steuerung der Funktionen der Kraftfahrzeug-Einbauvorrichtung wie Aufladen des Mobiltelefon-Akkumulators, Ansteuern einer Freisprecheinrichtung oder Weiterleitung von Hochfrequenzsignalen an eine Kraftfahrzeug-Antenne aus. Als mechanische Schnittstelle zum Kraftfahrzeug dient eine standardisierte Steckverbindung 4, beispielsweise gemäß der einleitend erwähnten VDA-Richtlinie.

Die Zentralsteuereinheit 3 steuert diejenigen Funktionen der Einbauvorrichtung und diejenigen Schnittstellenanschlüsse, die bei der Mehrzahl der für den Einbau eines Mobiltelefons in Frage kommenden Kraftfahrzeugen standardisiert sind, beispielsweise die 12-Volt-Stromversorgung oder das Zündsignal, das zum Einschalten des Mobiltelefons verwendet werden kann. Weitgehend standardisiert ist auch die Ansteuerung der Antenne sowie der Freisprecheinrichtung.

Andere Funktionen wie beispielsweise die Kraftfahrzeugbeleuchtung sind für verschiedene PKW unterschiedlich ausgelegt. Auch die Datenübertragung zu externen Geräten wie beispielsweise einem externen Faxgerät oder einem tragbaren Computer sind von dem erwähnten VDA-Standard nicht erfaßt. Weiterhin gibt es Fahrzeuge mit einem fahrzeugspezifischen Kommunikationsprotokoll, z.B. ein sogenanntes "vehicle area network" (VAN), das in einem Bordcomputer Anwendung finden kann. Zur Realisierung weiterer Funktionen der Kraftfahrzeug-Einbauvorrichtung, beispielsweise die Aktivierung der Displaybeleuchtung des Mobiltelefons beim Einschalten der Armaturenbeleuchtung des Kraftfahrzeugs oder der Verwendung der Audio-Endstufe oder der Lautsprecher des Autoradios für das Mobiltelefon enthält die erfindungsgemäße Kraftfahrzeug-Einbauvorrichtung die kraftfahrzeugspezifische Anpassungs-steuereinheit 5. Durch diese wird die Zentralsteuereinheit 3 und die Schnittstelle 4 der Kraftfahrzeug-Einbauvorrichtung an das jeweilige Kraftfahrzeug angepaßt. Als weitere Funktion läßt sich damit eine Datenübertragung zwischen einem Kraftfahrzeug-Datenbus oder Bordcomputer und dem Mobiltelefon bzw. der Einbauvorrichtung realisieren. Das Gehäuse und die Zentralsteuereinheit 3 der Einbauvorrichtung können somit für verschiedenste Kraftfahrzeugtypen verwendet werden. Lediglich die Anpassungssteuereinheit 5, die beispielsweise als Steckplatine ausgebildet sein kann, muß spezifisch für einen Kraftfahrzeug-Hersteller oder Kraftfahrzeugtyp entwickelt werden. Durch diese modulare Konzeption sinken die Entwicklungs- und Herstellungskosten der Kraftfahrzeug-Einbauvorrichtung. Außerdem läßt sich eine Anpassung an neue Kraftfahrzeugtypen oder eine Realisierung neuer Funktionen einfach durch Austausch der Anpassungssteuereinheit realisieren.

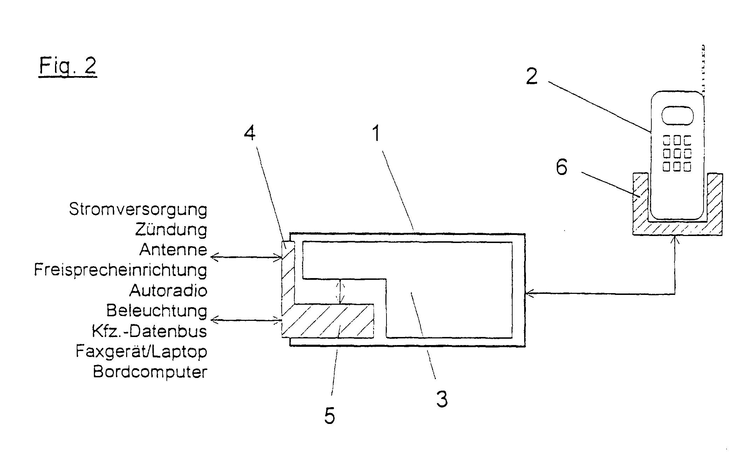

Ein zweites Ausführungsbeispiel einer erfindungsgemäßen Kraftfahrzeug-Einbauvorrichtung ist in Fig. 2 dargestellt. Dieses unterscheidet sich von dem in Fig. 1 gezeigten ersten Ausführungsbeispiel dadurch, daß die Anpassungssteuereinheit 5 zusammen mit der Steckverbindung 4 ausgebildet ist. Das Anpassungsmodul enthält somit Steuereinheit 5 und Steckverbindung 4 und wird gemeinsam ausgetauscht. Somit ist sowohl eine elektronische als auch eine mechanische Anpassung an das Kraftfahrzeug möglich, ohne die Zentralsteuereinheit zu ändern.

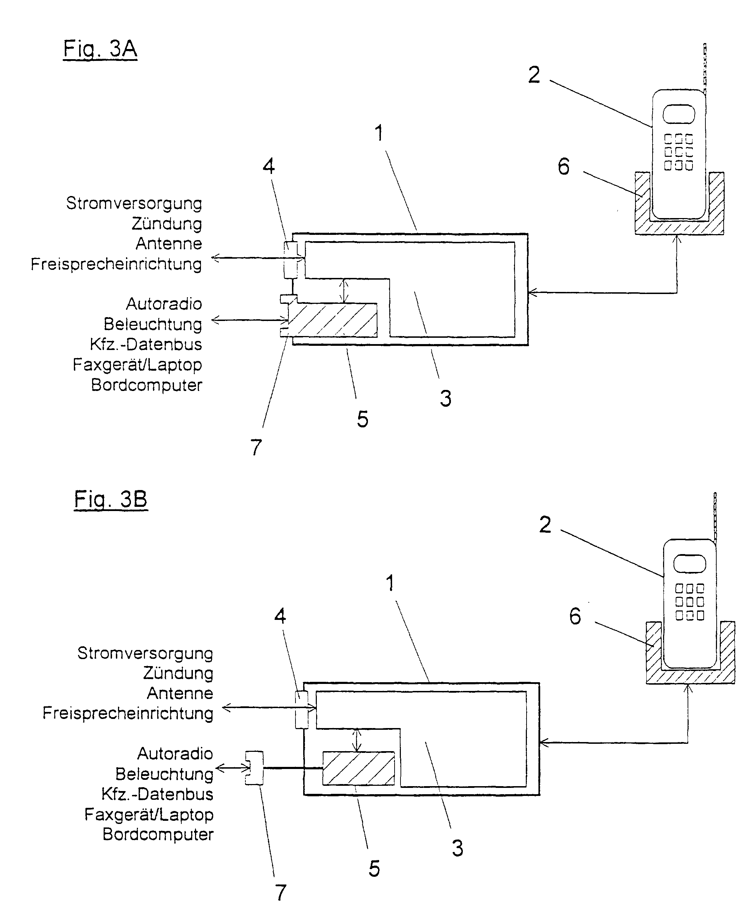

Fig. 3A und 3B zeigen ein weiteres Ausführungsbeispiel einer erfindungsgemäßen Kraftfahrzeug-Einbauvorrichtung. Bei diesem sind zwei Steckverbindungen, eine standardisierte Steckverbindung 4 und eine kraftfahrzeugspezifische Steckverbindung 5 vorgesehen. Ähnlich wie bei dem in Fig. 2 gezeigten zweiten Ausführungsbeispiel ist die Anpassungs-steuereinheit 5 zusammen mit der kraftfahrzeugspezifischen Steckverbindung 7 ausgebildet. Anpassungssteuereinheit und die kraftfahrzeugspezifische Steckverbindung können daher dem jeweiligen Kraftfahrzeug entsprechend eingebaut werden, während die Zentralsteuereinheit 3 und die standardisierte Steckverbindung 4 universell einsetzbar sind. In Fig. 3B ist die kraftfahrzeugspezifische Steckverbindung mittels eines Kabels nach außen geführt.

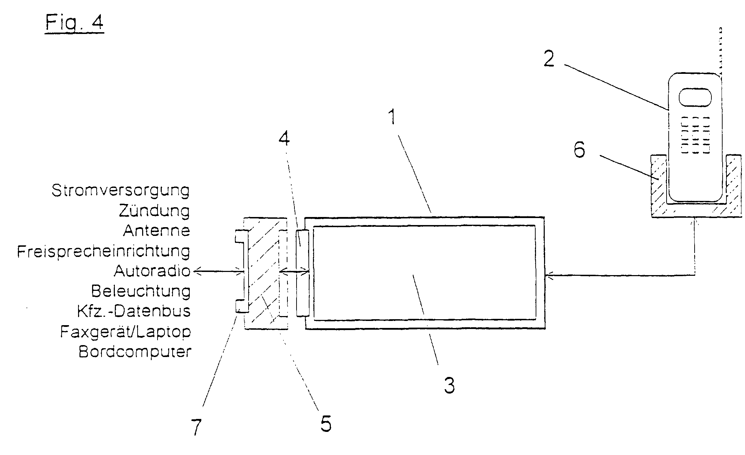

Fig. 4 zeigt ein viertes Ausführungsbeispiel einer erfindungsgemäßen Kraftfahrzeug-Einbauvorrichtung. Die Anpassungs-steuereinheit 5 ist in einem separaten Gehäuse untergebracht. Dieses wird mittels einer standardisierten Steckverbindung 4 am Hauptgehäuse der Kraftfahrzeug-Einbauvorrichtung 1 befestigt. Die Verbindung zum Kraftfahrzeug erfolgt über eine kraftfahrzeugspezifische Steckverbindung 7. Bei Kraftfahrzeugen die keine standardisierten Steckverbindungen verwenden, kann auf diese Weise die elektrische und mechanische Anpassung der Kraftfahrzeug-Einbauvorrichtung an das Kraftfahrzeug durch Anstecken des Anpassungsmoduls erfolgen.

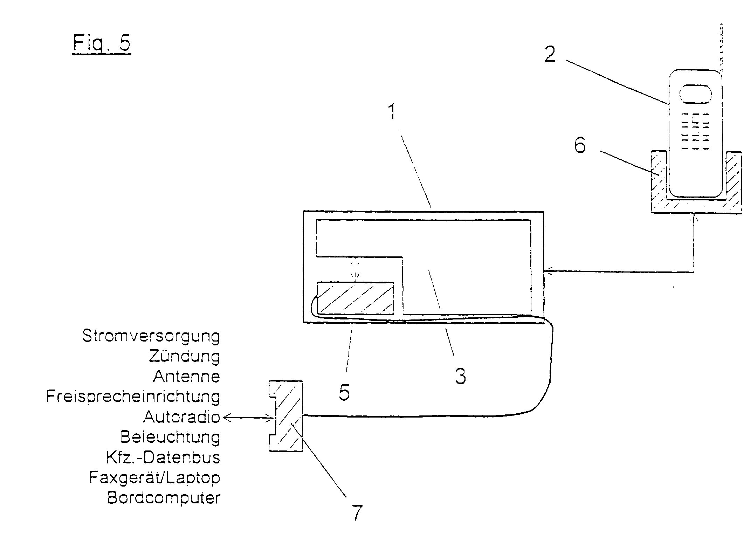

Fig. 5 zeigt ein weiteres Ausführungsbeispiel, welches eine Variante des vierten Ausführungsbeispiels ist. Wiederum wird zum Anschluß an das Kraftfahrzeug nur eine kraftfahrzeugspezifische Steckverbindung 7 verwendet. Die Anpassungssteuereinheit 5 befindet sich jedoch im Hauptgehäuse der Kraftfahrzeug-Einbauvorrichtung 1, und es wird ein Kabelbaum von der Anpassungssteuereinheit 5 durch das Gehäuse zu der Steckverbindung 7 geführt. Somit kann die Steckverbindung 7 mit geringem Aufwand gegen eine andere Steckverbindung ausgetauscht werden.

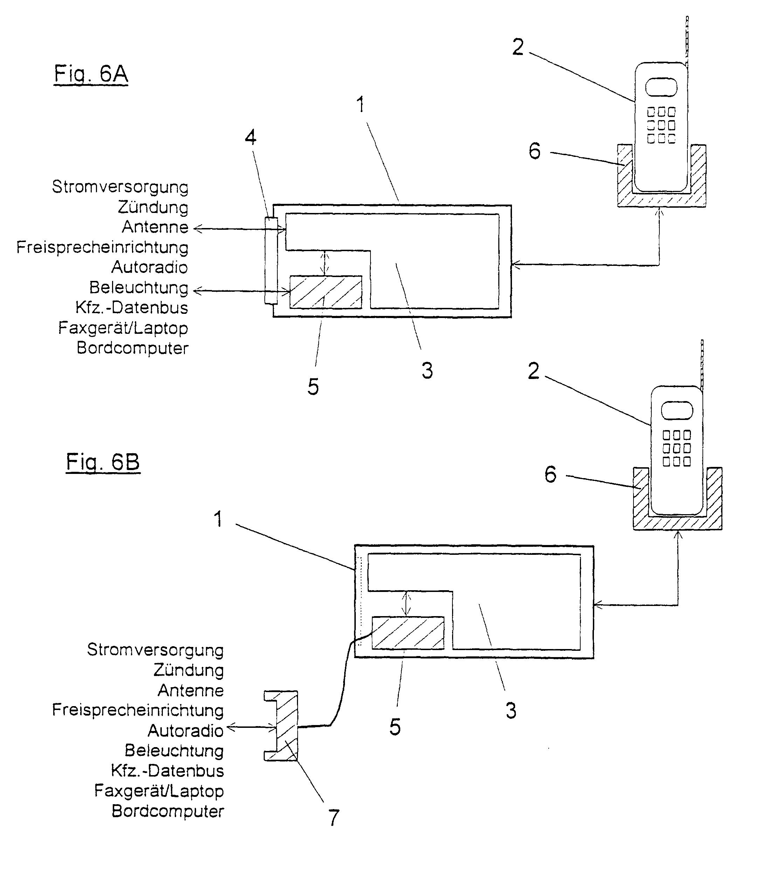

Ein sechstes Ausführungsbeispiel einer erfindungsgemäßen Kraftfahrzeug-Einbauvorrichtung ist in Fig. 6 dargestellt. Die standardisierte Steckverbindung 4 ist abnehmbar ausgeführt. Fig. 6A zeigt den ersten Zustand dieses Ausführungsbeispiels, in den die Verbindung zum Kraftfahrzeug über die standardisierte Steckverbindung 4 erfolgt. Erfordert das Kraftfahrzeug jedoch eine spezifische Steckverbindung, so kann die standardisierte Steckverbindung 4 einfach abmontiert und durch eine Blende ersetzt werden und eine Kabelverbindung von der Anpassungssteuereinheit 5 wird zur kraftfahrzeugspezifischen Steckverbindung 7 durch das Gehäuse der Einbauvorrichtung vorzugsweise durch den für die Steckverbindung 4 vorgesehenen Gehäusedurchbruch geleitet. Die Anpassungssteuereinheit 5 ist so ausgebildet, daß der Signalaustausch mit dem Kraftfahrzeug wahlweise über die standardisierte Steckverbindung 4 oder die kraftfahrzeugspezifische Steckverbindung erfolgen kann. Dieses Ausführungsbeispiel hat den Vorteil einer sehr hohen Flexibilität, da die elektrische und mechanische (über Steckverbindung) Anpassung an das Kraftfahrzeug völlig frei realisierbar ist.

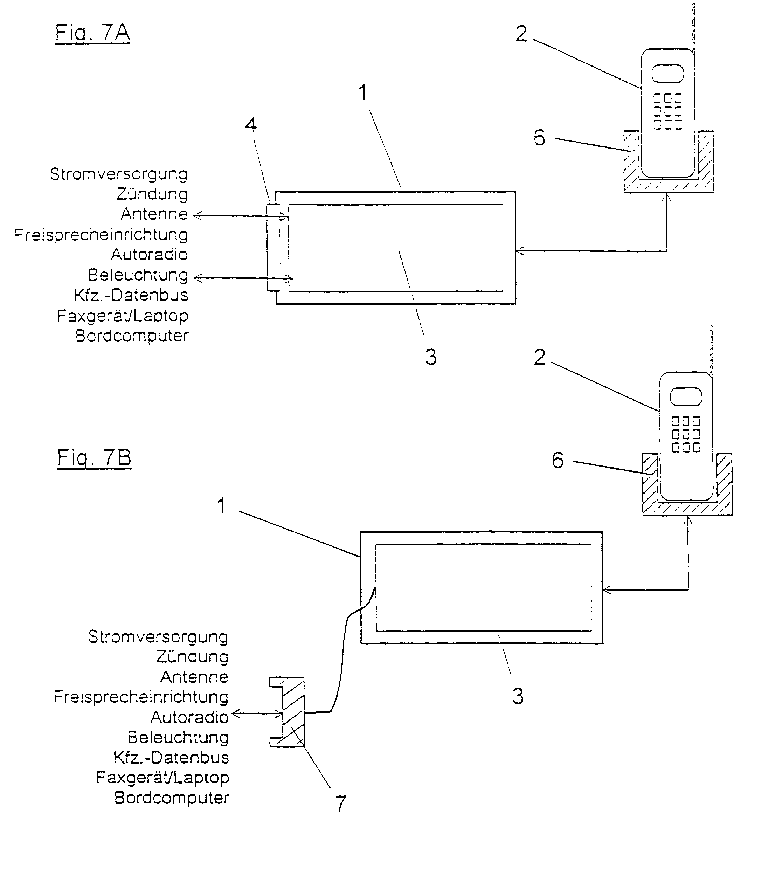

Fig. 7 zeigt ein siebtes Ausführungsbeispiel einer erfindungsgemäßen Kraftfahrzeug-Einbauvorrichtung, die wie beim sechsten Ausführungsbeispiel eine mechanische Anpassung an verschiedene Steckverbindungstypen eines Kraftfahrzeuges ermöglicht, jedoch keine Anpassungssteuereinheit aufweist. Dieses Ausführungsbeispiel ist vorteilhaft, wenn beispielsweise nur die für eine große Anzahl von Kraftfahrzeugtypen standardisierten Grundfunktionen der Kraftfahrzeug-Einbauvorrichtung genutzt werden sollen, die Einbauvorrichtung jedoch auf verschiedene Steckverbindertypen angepaßt werden soll. Das siebte Ausführungsbeispiel liefert eine derartige Kraftfahrzeug-Einbauvorrichtung, die mit geringem Kostenaufwand realisiert werden und einfach auf verschiedene Steckverbindungstypen umgestellt werden kann.

Die Erfindung schlägt eine Kraftfahrzeug-Einbauvorrichtung vor, die durch ein modulares Aufbaukonzept mechanisch und/oder elektronisch leicht an verschiedene Kraftfahrzeughersteller oder -typen anpaßbar ist.

## Patentansprüche

1. Kraftfahrzeug-Einbauvorrichtung (1) für ein Mobiltelefon (2), mit einer Zentralsteuereinheit (3) und einer Schnittstelle zum Signalaustausch zwischen Zentralsteuereinheit (3) und dem Kraftfahrzeug,
**dadurch gekennzeichnet, daß** die kraftfahrzung-Einbauvorrichtung eine kraftfahrzeugspezifische Anpassungssteuereinheit (5) zur Anpassung von Funktionen der Schnittstelle und/oder Zentralsteuereinheit (3) an den jeweiligen Kraftfahrzeugtyp aufweist.

2. Kraftfahrzeug-Einbauvorrichtung nach Anspruch 1,
**dadurch gekennzeichnet,**
**daß** die Anpassungssteuereinheit (5) eine Einrichtung zur Umsetzung der an der Schnittstelle anliegenden jeweiligen Signalpegel aufweist.

3. Kraftfahrzeug-Einbauvorrichtung nach Anspruch 1 oder 2,
**dadurch gekennzeichnet,**
**daß** die Anpassungssteuereinheit eine Einrichtung zur Umsetzung von Signalen zwischen einem fahrzeugspezifischen Kommunikationsprotokoll und einem mobiltelefonspezifischen Kommunikationsprotokoll aufweist.

4. Kraftfahrzeug-Einbauvorrichtung nach einem der Ansprüche 1 bis 3,
**dadurch gekennzeichnet,**
**daß** die Anpassungssteuereinheit (5) eine Verbindung des Mobiltelefons (2) mit dem Kraftfahrzeug-Radio, der KraftfahrzeugBeleuchtungsschaltung und/oder einem Kraftfahrzeug-Datenbus ermöglicht.

5. Kraftfahrzeug-Einbauvorrichtung nach einem der Ansprüche 1 bis 4,
**dadurch gekennzeichnet,**
**daß** die Anpassungssteuereinheit (5) im gleichen Gehäuse mit der Zentralsteuereinheit (3) und der Schnittstelle untergebracht ist.

6. Kraftfahrzeug-Einbauvorrichtung nach einem der Ansprüche 1 bis 4,
**dadurch gekennzeichnet,**
**daß** die Anpassungssteuereinheit (5) in einem separaten Gehäuse untergebracht ist, wobei die Anpassungssteuereinheit (5) mittels einer standardisierten Steckverbindung (4) mit der Zentralsteuereinheit (3) und mittels einer kraftfahrzeugspezifischen Steckverbindung (7) mit dem Kraftfahrzeug verbindbar ist.

7. Kraftfahrzeug-Einbauvorrichtung nach einem der Ansprüche 1 bis 5,
**dadurch gekennzeichnet,**
**daß** die Zentralsteuereinheit (3) mittels einer standardisierten Steckverbindung (4) mit dem Kraftfahrzeug verbindbar ist.

8. Kraftfahrzeug-Einbauvorrichtung nach Anspruch 7,
**dadurch gekennzeichnet,**
**daß** die Anpassungssteuereinheit (5) mittels der standardisierten Steckverbindung (4) mit dem Kraftfahrzeug verbunden ist.

9. Kraftfahrzeug-Einbauvorrichtung nach einem der Ansprüche 1 bis 5,
**dadurch gekennzeichnet,**
**daß** die Einbauvorrichtung (1) mittels einer kraftfahrzeugspezifischen Steckverbindung (7) mit dem Kraftfahrzeug verbindbar ist.

10. Kraftfahrzeug-Einbauvorrichtung nach Anspruch 9,
**dadurch gekennzeichnet,**
**daß** die kraftfahrzeugspezifische Steckverbindung (7) über eine durch ein Gehäuse der Kraftfahrzeug-Einbauvorrichtung (1) geführte Kabelverbindung mit der Anpassungssteuereinheit (5) verbunden ist.

11. Kraftfahrzeug-Einbauvorrichtung nach einem der Ansprüche 1 bis 5,
**dadurch gekennzeichnet,**
**daß** zur Verbindung der Einbauvorrichtung (1) mit dem Kraftfahrzeug eine standardisierte (4) und eine kraftfahrzeugspezifische (7) Steckvorrichtung vorgesehen sind.

12. Vorrichtung nach Anspruch 11,
**dadurch gekennzeichnet,**
**daß** die Zentralsteuereinheit (3) mittels der standardisierten Steckverbindung (4) und die Anpassungssteuereinheit (5) mittels der kraftfahrzeugspezifischen Steckverbindung (7) mit dem Kraftfahrzeug verbindbar ist.

13. Kraftfahrzeug-Einbauvorrichtung nach einem der Ansprüche 1 bis 5,
**dadurch gekennzeichnet,**
**daß** die Schnittstelle ausgebildet ist zur Verbindung der Zenralsteuereinheit (3) und/oder der Anpassungssteuereinheit (5) mit dem Kraftfahrzeug wahlweise mittels einer standardisierten Steckverbindung (4) oder einer kraftfahrzeugspezifischen Steckverbindung (7).

14. Kraftfahrzeug-Einbauvorrichtung nach Anspruch 13,
**dadurch gekennzeichnet,**
**daß** die kraftfahrzeugspezifische Steckverbindung (7) vorzugsweise über eine durch ein Gehäuse der Kraftfahrzeug-Einbauvorrichtung (1) geführte Kabelverbindung mit der Anpassungs-Steuereinheit (5) verbunden ist.

15. Kraftfahrzeug-Einbauvorrichtung nach Anspruch 14,
**dadurch gekennzeichnet,**
**daß** die Kabelverbindung durch den Gehäusedurchbruch der standardisierten Steckverbindung (4) geführt wird.

## Claims

1. Motor vehicle built-in unit (1) for a mobile phone (2), having a central control unit (3) and an interface for exchanging signals between the central control unit (3) and the motor vehicle, **characterized in that** the motor vehicle built-in unit has a motor vehicle-specific adapter control unit (5) for adapting functions of the interface and/or central control unit (3) to the respective type of motor vehicle.

2. Motor vehicle built-in unit according to Claim 1, **characterized in that** the adapter control unit (5) has a device for converting the respective signal levels present at the interface.

3. Motor vehicle built-in unit according to Claim 1 or 2, **characterized in that** the adapter control unit has a device for converting signals between a motor vehicle-specific communications protocol and a mobile phone-specific communications protocol.

4. Motor vehicle built-in unit according to one of Claims 1 to 3, **characterized in that** the adapter control unit (5) makes it possible to connect the mobile phone (2) to the radio of the motor vehicle, the lighting circuit of the motor vehicle and/or a databus of the motor vehicle.

5. Motor vehicle built-in unit according to one of Claims 1 to 4, **characterized in that** the adapter control unit (5) is accommodated in the same housing with the central control unit (3) and the interface.

6. Motor vehicle built-in unit according to one of Claims 1 to 4, **characterized in that** the adapter control unit (5) is accommodated in a separate housing, it being possible to connect the adapter control unit (5) to the central control unit (3) by means of a standardized plug-type connector (4), and to the motor vehicle by means of a motor vehicle-specific plug-type connector (7).

7. Motor vehicle built-in unit according to one of Claims 1 to 5, **characterized in that** the central control unit (3) can be connected to the motor vehicle by means of a standardized plug-type connector (4).

8. Motor vehicle built-in unit according to Claim 7, **characterized in that** the adapter control unit (5) is connected to the motor vehicle by means of the standardized plug-type connector (4).

9. Motor vehicle built-in unit according to one of Claims 1 to 5, **characterized in that** the built-in unit (1) can be connected to the motor vehicle by means of a motor vehicle-specific plug-type connector (7).

10. Motor vehicle built-in unit according to Claim 9, **characterized in that** the motor vehicle-specific plug-type connector (7) is connected to the adapter control unit (5) using a cable connection which is led through a housing of the motor vehicle built-in unit (1).

11. Motor vehicle built-in unit according to one of Claims 1 to 5, **characterized in that** a standardized plug-type device (4) and a motor vehicle-specific plug-type device (7) are provided for connecting the built-in unit (1) to the motor vehicle.

12. Device according to Claim 11, **characterized in that** the central control unit (3) can be connected to the motor vehicle by means of the standardized plug-type connector (4) and the adapter control unit (5) can be connected to the motor vehicle by means of the motor vehicle-specific plug-type connector (7).

13. Motor vehicle built-in unit according to one of Claims 1 to 5, **characterized in that** the interface is designed to connect the central control unit (3) and/or the adapter control unit (5) to the motor vehicle either by means of a standardized plug-type connector (4) or a motor vehicle-specific plug-type connector (7).

14. Motor vehicle built-in unit according to Claim 13, **characterized in that** the motor vehicle-specific plug-type connector (7) is connected to the adapter control unit (5), preferably using a cable connection which is led through a housing of the motor vehicle built-in unit (1).

15. Motor vehicle built-in unit according to Claim 14, **characterized in that** the cable connector is led through the housing cutout of the standardized plug-type connector (4).

## Revendications

1. Dispositif (1) de montage d'un téléphone (2) mobile dans un véhicule automobile, comportant une unité (3) centrale de commande et une interface pour l'échange de signaux entre l'unité (3) centrale de commande et le véhicule automobile,
**caractérisé en ce que** le dispositif de montage dans un véhicule automobile comporte une unité (5) de commande d'adaptation, spécifique du véhicule automobile, pour adapter des fonctions de l'interface et/ou de l'unité (3) centrale de commande au type respectif de véhicule automobile.

2. Dispositif de montage dans un véhicule automobile suivant la revendication 1, **caractérisé en ce que** l'unité (5) de commande d'adaptation comporte un dispositif pour convertir le niveau de signal respectif appliqué à l'interface.

3. Dispositif de montage dans un véhicule automobile suivant la revendication 1 ou 2, **caractérisé en ce que** l'unité de commande d'adaptation comporte un dispositif pour convertir des signaux entre un protocole de communication spécifique du véhicule et un protocole de communication spécifique du téléphone mobile.

4. Dispositif de montage dans un véhicule automobile suivant l'une des revendications 1 à 3, **caractérisé en ce que** l'unité (5) de commande d'adaptation permet de relier le téléphone (2) mobile à la radio du véhicule, au circuit d'éclairage du véhicule et/ou à un bus de données du véhicule.

5. Dispositif de montage dans un véhicule automobile suivant l'une des revendications 1 à 4, **caractérisé en ce que** l'unité (5) de commande d'adaptation est logée dans le même boîtier que l'unité (3) centrale de commande et l'interface.

6. Dispositif de montage dans un véhicule automobile suivant l'une des revendications 1 à 4, **caractérisé en ce que** l'unité (5) de commande d'adaptation est logée dans un boîtier séparé, l'unité (5) de commande d'adaptation pouvant être reliée à l'unité (3) centrale de commande au moyen d'une connexion (4) enfichable normalisée, et au véhicule au moyen d'une connexion (7) enfichable spécifique du véhicule.

7. Dispositif de montage dans un véhicule automobile suivant l'une des revendications 1 à 5, **caractérisé en ce que** l'unité (3) centrale de commande peut être reliée au véhicule au moyen d'une connexion (4) enfichable normalisée.

8. Dispositif de montage dans un véhicule automobile suivant la revendication 7, **caractérisé en ce que** l'unité (5) de commande d'adaptation est reliée au véhicule au moyen de la connexion (4) enfichable normalisée.

9. Dispositif de montage dans un véhicule automobile suivant l'une des revendications 1 à 5, **caractérisé en ce que** le dispositif (1) de montage peut être relié au véhicule au moyen d'une connexion (7) enfichable spécifique du véhicule.

10. Dispositif de montage dans un véhicule automobile suivant la revendication 9, **caractérisé en ce que** la connexion (7) enfichable spécifique du véhicule est reliée à l'unité (5) de commande d'adaptation au moyen d'une liaison par câble passant dans un boîtier du dispositif (1) de montage.

11. Dispositif de montage dans un véhicule automobile suivant l'une des revendications 1 à 5, **caractérisé en ce qu'**une connexion (4) enfichable normalisée et une connexion (7) enfichable spécifique du véhicule sont prévues pour relier le dispositif (1) de montage au véhicule.

12. Dispositif de montage dans un véhicule automobile suivant la revendication 11, **caractérisé en ce que** l'unité (3) centrale de commande peut être reliée au véhicule au moyen de la connexion (4) enfichable normalisée, et l'unité (5) de commande d'adaptation peut être reliée au véhicule au moyen de la connexion (7) enfichable spécifique du véhicule.

13. Dispositif de montage dans un véhicule automobile suivant l'une des revendications 1 à 5, **caractérisé en ce que** l'interface est conçue pour la liaison de l'unité (3) centrale de commande et/ou de l'unité (5) de commande d'adaptation au véhicule au moyen, au choix, d'une connexion (4) enfichable normalisée ou d'une connexion (7) enfichable spécifique du véhicule.

14. Dispositif de montage dans un véhicule automobile suivant la revendication 13, **caractérisé en ce que** la connexion (7) enfichable spécifique du véhicule est de préférence reliée à l'unité (5) de commande d'adaptation au moyen d'une liaison par câble passant dans un boîtier du dispositif (1) de montage.

15. Dispositif de montage dans un véhicule automobile suivant la revendication 14, **caractérisé en ce que** la liaison par câble est guidée par l'ajour de boîtier de la connexion (4) enfichable normalisée.
